Europäisches Patentamt

European Patent Office

Office européen des brevets

(11) Veröffentlichungsnummer: **0 017 260**
**B1**

(12) # EUROPÄISCHE PATENTSCHRIFT

(45) Veröffentlichungstag der Patentschrift:
12.05.82

(51) Int. Cl.³: **B 60 T 15/42**

(21) Anmeldenummer: 80200047.1

(22) Anmeldetag: 21.01.80

(54) Schnellbremsbeschleuniger.

(30) Priorität: 06.04.79  CH 3237/79

(43) Veröffentlichungstag der Anmeldung:
15.10.80 Patentblatt 80/21

(45) Bekanntmachung des Hinweises auf die Patenterteilung:
12.05.82 Patentblatt 82/19

(84) Benannte Vertragsstaaten:
AT BE CH DE FR GB IT NL SE

(56) Entgegenhaltungen:
keine

(73) Patentinhaber: **Werkzeugmaschinenfabrik Oerlikon-Bührle AG, Birchstrasse 155, CH-8050 Zürich (CH)**

(72) Erfinder: **Müller, Walter, Rebenweg 10, CH-8303 Bassersdorf (CH)**

Schnellbremsbeschleuniger

Die Erfindung betrifft einen Schnellbremsbeschleuniger für indirekt wirkende Druckluftbremsen von Schienenfahrzeugen, mit einem Steuerkolben, der einerseits in Schließrichtung eines von ihm gesteuerten Beschleunigungsventils, das in Offenstellung die Entlüftung der Hauptluftleitung bewirkt, vom Druck der Hauptluftleitung und anderseits vom Druck einer, mit der Hauptluftleitung über eine Drosselstelle verbundenen Steuerkammer beaufschlagt ist, und mit einem Ventil, das von einem Druck gegen die Kraft einer vorgespannten, in einem Atmosphärendruck aufweisenden Raum angeordneten Feder belastet ist, wobei die Feder auf eine einem den Betriebsdruck der Hauptluftleitung um einen bestimmten Wert übersteigenden Dr~ck entsprechende Kraft vorgespannt ist.

:.. ist bekannt, daß an langen Personen- und Güterschnellzügen die vorgeschriebene kurze Bremszylinderfüllzeit an Einzelwagen mit den Betriebsbremsbeschleunigern nicht eingehalten werden kann, da sich bei Ausführung von Schnellbremsungen die Hauptluftleitung gegen das Zugende zu langsam entleert. Mit Hilfe von zusätzlichen Schnellbremsbeschleunigern oben beschriebener Art wird bei Schnellbremsungen an jedem Wagen die Hauptluftleitung über einen großen Querschnitt mit der Atmosphäre verbunden, so daß sich auch am Zugende die Hauptluftleitung rasch entleert. Diese Schnellbremsbeschleuniger müssen jedoch so unempfindlich sein und so gleichmäßig arbeiten, daß ein ungewolltes Anspringen bei Ausführung beliebiger Betriebsbremsungen ausgeschlossen ist. Erreicht wird dies durch eine entsprechende Bemessung der die Hauptluftleitung und die Steuerkammer verbindenden Drosselstelle.

Neuerdings werden nun aber bei den internationalen Städteschnellzügen Druckluftbremseinrichtungen verwendet, welche beim Bremslösen langanhaltende Füllstöße bis 8 bar in die Hauptluftleitung einsteuern, die insbesondere eine steile Abklingcharakteristik aufweisen. Dieser scharfe Druckabfall beim Abklingen des Füllstoßes kann nun die bisher verwendeten Schnellbremsbeschleuniger zum unerwünschten Ansprechen bringen.

Bei einem bekannten Schnellbremsbeschleuniger (DE-A-27 29 848) ist zur Behebung der erwähnten Nachteile in die Verbindung von der Hauptluftleitung zur Steuerkammer ein Absperrventil vor die Drosselstelle eingeordnet. Dieses Ventil sperrt die Verbindung zwischen Hauptluftleitung und Steuerkammer bei einem bestimmten über dem Betriebsdruck liegenden Füllstoßdruck, wodurch der momentane Druck in der Steuerkammer während eines Füllstoßes konstant gehalten wird. Allerdings verzögert sich dabei die Ansprechbereitschaft des Schnellbremsbeschleunigers am Ende eines Füllstoßes, bedingt durch die Druckausgleichsphase.

Die Erfindung, wie sie in den Ansprüchen gekennzeichnet ist, löst die Aufgabe, einer Schnellbremsbeschleuniger zu schaffen, de auch beim Abklingen von hohen Füllstößen nich unerwünscht anspricht und trotzdem eine zeit lich unverzögerte Schnellbremsbereitschaft auf weist.

Die durch die Erfindung erreichten Vorteile sind im wesentlichen darin zu sehen, daß insbesondere beim Abklingen von hohen Füllstö ßen der Steuerkammerdruck zeitlich unverzö gert dem Hauptluftleitungsdruck über die offene Bypassverbindung angeglichen wird.

Ausführungsbeispiele des erfindungsgemä ßen Schnellbremsbeschleunigers sind anhanc der beigefügten Zeichnungen dargestellt. Es zeigen

Fig. 1, 4 und 5 je einen schematisch dargestell ten Schnellbremsbeschleuniger im Schnitt,

Fig. 2, 3, 6 und 7 je einen schematisch dargestellten Ausschnitt eines Schnellbremsbeschleunigers,

Fig. 8 ein Diagramm des Verlaufs der beiden Drücke D1 und D2 beim Lösen durch einen hohen Füllstoß und einer den Füllstoß unterbrechenden Schnellbremsung.

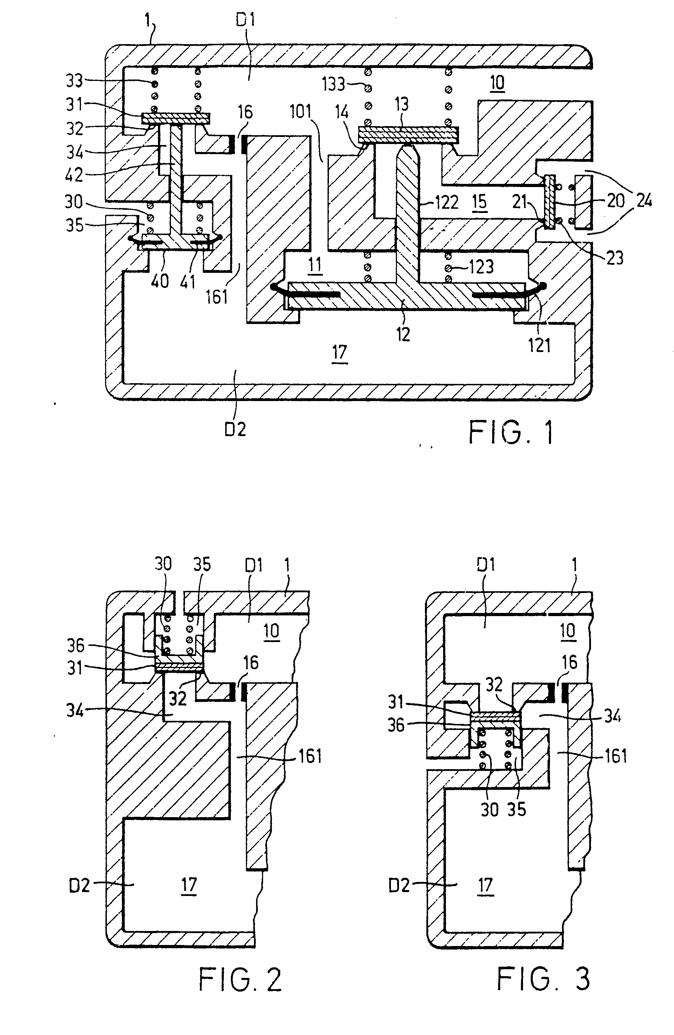

Gemäß Fig. 1 enthält ein Gehäuse 1 einen direkt mit der Hauptluftleitung verbundenen Raum 10, nachfolgend als Hauptluftleitung 10 bezeichnet. Mit dieser über einen Kanal 101 verbunden ist ein Druckraum 11 auf der einen Seite eines Steuerkolbens 12 angeordnet. Auf der anderen Seite des Steuerkolbens 12 befindet sich eine Steuerkammer 17, die über einen Kanal 161 und eine Drosselstelle 16 mit der Hauptluftleitung 10 verbunden ist. Ein am Steuerkolben 12 angebrachter Stößel 122 ist dazu bestimmt, einen Ventilteller 13 von einem Ventilsitz 14 gegen eine Schließfeder 13, nachstehend Beschleunigungsventil 13, 14 genannt, abzuheben. Im drucklosen Zustand wird der Steuerkolben 12 von einer Feder 123 in Ventilabschlußstellung gehalten. Eine Membrane 121 dichtet die beiden Druckkammern 11 und 17 gegeneinander ab. Ein Druckrückhalteventil 20, 21, bestehend aus einem Ventilteller 20, einem Ventilsitz 21 und einer vorgespannten Feder 23, hält einen Entlüftungskanal 15 bis zu einem vorbestimmten Druck verschlossen. Die Öffnungen 24 bilden die Entlüftungsstellen zur Atmosphäre.

Parallel zur Drosselstelle 16 ist ein abschließbarer Bypasskanal 34 als zusätzliche Verbindung zwischen der Hauptluftleitung 10 und der Steuerkammer 17 angeordnet. D~ Abschluß erfolgt durch ein Bypassventil mit ~em Teller 31 und einem Ventilsitz 32, sowie e~ er Schließfeder 33. Das Bypassventil 31, 32 wird gesteuert durch einen gehäusefest abgestützten Kolben 40 mit einer Kolbenstange 42 und einer dichtenden Membrane 41. Gehäusefest abgestützt in einem Atmosphärendruck aufweisenden Raum 35 und gegen den Kolben 40 wirkend ist eine vorgespannte Feder 30 angeordnet.

Die Wirkungsweise des Schnellbremsbeschleunigers ist folgende:

Die in der Fig. 1 dargestellte Lage entspricht dem Lösezustand der Bremseinrichtung. Einem Druck D1 in der Hauptluftleitung 10, auch Betriebsregeldruck genannt, bzw. in der Druckkammer 11 steht ein gleich großer Druck D2 in der Steuerkammer 17 entgegen. Damit bleibt das Beschleunigungsventil 13, 14 geschlossen. Die Feder 30 und der Kolben 40 sind derart aufeinander abgestimmt, daß beispielsweise erst ein den maximalen Betriebsregeldruck D1 von 5,0 bar um 0,2 bar übersteigenden auf den Kolben 40 wirkenden Druck die Kraft der vorgespannten Feder 30 zu überwinden vermag. Das Bypassventil 31, 32 bleibt somit bei Betriebsregeldruck geschlossen.

Bei Drücken D1 in der Hauptluftleitung 10 bis zum maximalen Betriebsregeldruck, z. B. 5,0 bar, arbeitet der Schnellbremsbeschleuniger in bekannter Weise bei Lösezustand, Betriebsbremsung, Vollbremsung oder Schnellbremsung, sowie beim Lösen durch einen Füllstoß ohne Überladung. Somit erübrigt sich eine Beschreibung dieser Vorgänge.

Lösen durch Füllstoß mit Überladung:

Wird nach einer erfolgten Bremsung, bei der die Drücke D1 und D2 auf beispielsweise 3,5 bar abgesunken sind, der Hauptluftleitungsdruck D1 durch einen hohen, den maximalen Betriebsregeldruck wesentlich übersteigenden Füllstoß erhöht, so bildet sich vorerst eine Druckdifferenz zwischen den Drücken D1 und D2, bedingt durch das langsamere Auffüllen der Steuerkammer über die Drosselstelle 16. Der Druck D1 in der Hauptluftleitung steigt gemäß der Kurve A in Fig. 8 steil an, bis beispielsweise 8 bar, währenddem der Druck D2 in der Steuerkammer 17 gemäß der Kurve B vorerst einen kleineren Druckgradienten aufweist. Erreicht der Druck D2 in der Steuerkammer 17 beispielsweise den Wert 5,2 bar, überwindet der Kolben 40 die Kraft der Feder 30 und öffnet mit dem Stößel 42 das Bypassventil 31, 32. Damit wird der Druck D2 in der Steuerkammer 17 sofort dem Hauptluftleitungsdruck D1 angeglichen. Selbstverständlich bleibt das Beschleunigerventil 13, 14 während dieser Phase geschlossen. Bei einem relativ schnellen Abklingen am Ende des Füllstoßes verhindert das offene Bypassventil 31, 32 die Bildung einer Druckdifferenz zwischen den Drücken in der Steuerkammer 17 und in der Druckkammer 11 bis zur Erreichung eines etwas über dem maximalen Betriebsregeldruck liegenden Schaltwertes S des Bypassventiles. Bei dem Schaltwert S von beispielsweise 5,2 bar in der Steuerkammer 17 wird der Kolben 40 durch die Kraft der Feder 30 wieder nach unten geschoben und die Schließfeder 33 schließt das Bypassventil 31, 32. Die sich kurzzeitig bildende kleine Druckdifferenz in den Kammern 11 und 17 liegt unter dem vorgeschriebenen Ansprechwert des Beschleunigungsventils 13, 14 und wird über die Drosselstelle 16 wieder eliminiert. Diese erfindungsgemäße Ausbildung verhindert somit ein unerwünschtes Ansprechen des Schnellbremsbeschleunigers beim Abklingen eines Füllstoßes. Ebenfalls ist die Betriebsbereitschaft für eine Schnellbremsung nach Wegnahme des Füllstoßes zeitlich unverzögert erstellt. Wird gemäß Fig. 8 der Füllstoß durch eine Schnellbremsung unterbrochen, so verhalten sich die beiden Drücke D1 bzw. D2 gemäß den beiden Kurven E bzw. F. Der Knick in der Kurve F wird durch das Schließen des Bypassventils 31, 32 bewirkt. Dadurch kann sich nun die für eine Schnellbremsung notwendige Druckdifferenz zwischen der Hauptluftleitung 10 und der Steuerkammer 17 bilden.

Bei einer Schnellbremsung oder Vollbremsung ist der Hauptluftleitungsdruck D1 nicht notwendigerweise unter beispielsweise 3 bar abzusenken. Vorteilhafterweise wird deshalb in den Entlüftungskanal 15 ein Druckrückhalteventil 20, 21 eingeordnet. Diese Druckrückhaltefunktion übt beispielsweise ein vorgespanntes Rückschlagventil 20, 21 aus, dessen gehäusefest abgestützte Feder 23 und die wirksame Druckfläche des Ventiltellers 20 entsprechend dem erwünschten Schließwert aufeinander abgestimmt sind.

Gemäß Fig. 2 ist das Bypassventil 31, 32 als vom Steuerdruck D2 gegen die vorgespannte Feder 30 belastetes Rückschlagventil ausgebildet. Der Ventilteller ist auf einer im Raum 35 verschiebbaren Hülse 36 befestigt. Ansonst stimmt die Ausbildung des Schnellbremsbeschleunigers mit derjenigen gemäß Fig. 1 überein. Die Wirkungsweise ist analog zu der für Fig. 1 beschriebenen.

In Fig. 3, dessen nicht dargestellter Teil des Schnellbremsbeschleunigers ebenfalls derjenigen von Fig. 1 entspricht, wirkt der Druck D1 der Hauptluftleitung 10 gegen die Kraft der Feder 30. Auch hier ist das Bypassventil, wie in Fig. 2, als vorgespanntes Rückschlagventil 31, 32 ausgebildet. In der Wirkungsweise wird als Öffnungsdruck nicht mehr der Druck D2 der Steuerkammer 17, sondern der Druck D1 der Hauptluftleitung 10 gegen die Kraft der Feder 30 verwendet. Der Unterschied in der Wirkungsweise gegenüber der Beschreibung von Fig. 1 liegt hauptsächlich darin, daß bei einem hohen, den Betriebsregeldruck erheblich übersteigenden Füllstoß das Bypassventil 31, 32 früher geöffnet wird, siehe Fig. 8, Kurve C und dadurch der Druckausgleich der beiden Drücke D1 und D2 früher erfolgt. Das Schließen des Bypassventils 31, 32 beim Abklingen eines Füllstoßes bleibt praktisch unverändert.

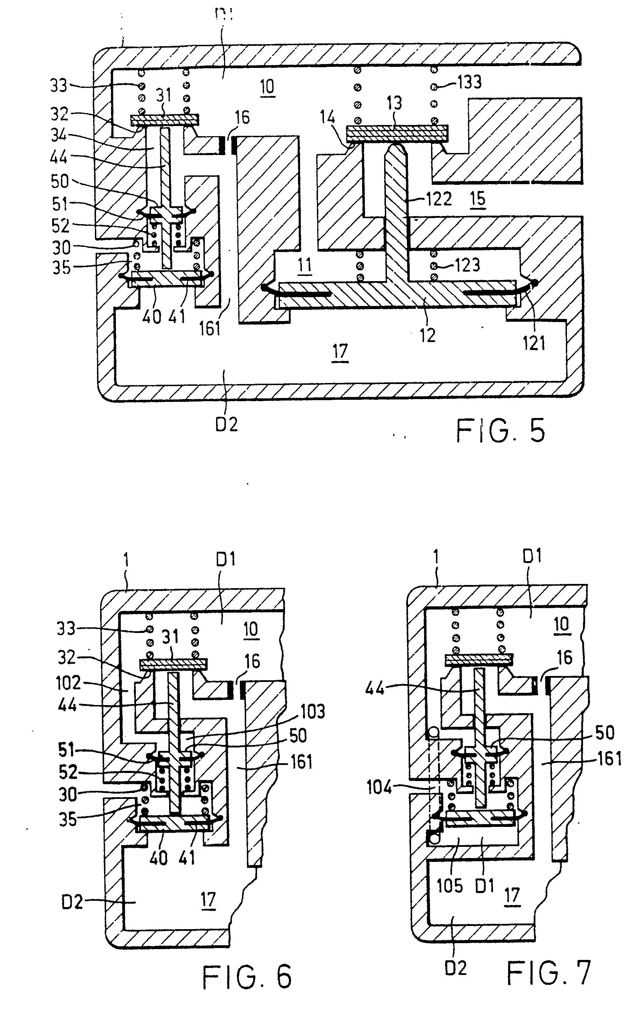

Als weitere vorteilhafte Ausbildung wird anstelle des Druckrückhalteventils 20, 21 am Ausgang des Entlüftungskanals 15 eine Druckrückhaltesteuereinrichtung am Bypassventil 31, 32 gemäß den Fig. 5, 6 und 7 integriert. Dabei ist an einem Steuerstößel 44 ein zusätzlich steuernder Kolben 50 mit gehäusefest angeordneter Membrane 51 vorhanden, der in Schließrichtung des Bypassventils 31, 32 von einem der beiden Drücke D1 oder D2 entgegen der Kraft einer vorgespannten Feder 52 belastet ist. Die Feder 52 ist in dem Atmosphärendruck aufweisenden Raum 35 gehäusefest abgestützt und mit der Druckfläche des Kolbens 50 derart abgestimmt, daß beispielsweise ein Druck von 3,0 bar die Kraft der Feder 52 überwindet und somit den Stößel 4 in Schließrichtung nach unten drückt. Der Entlüftungskanal 15 ist zur Atmosphäre offen.

Die Wirkungsweise des kombinierten Bypass-Druckrückhalteventils ist folgende:

Die in Fig. 5 dargestellte Lage der Ventile stellt den gelösten Betriebszustand dar. Im drucklosen Zustand jedoch ist das Bypassventil 31, 32 aufgrund der Kraft der vorgespannten Feder 52 geöffnet. Beim Auffüllen der Hauptluftleitung 10 wird die Steuerkammer 17 über das offene Bypassventil 31, 32 und über die Verbindungskanäle 34 und 161 direkt aufgefüllt. Bei einem Druck von beispielsweise 3,0 bar schließt das Bypassventil 31, 32 aufgrund des auf den Kolben 50 entgegen der Kraft der Feder 52 wirkenden Druckes. Das Auffüllen der Steuerkammer 17 erfolgt nun, wie an sich bekannt, über die Drosselstelle 16.

Durch Auslösung einer Schnellbremsung wird nach bekannter Art die Druckdifferenz zwischen den beiden Drücken D1 und D2 so groß, daß der Kolben 12 über den Stößel 122 das Beschleunigerventil 13, 14 öffnet, wodurch die Luft in der Hauptluftleitung 10 über den Entlüftungskanal 15 beschleunigt in die Atmosphäre entweichen kann. Ebenfalls wird aber auch der Druck D2 in der Verbindungskammer 34 über die Drosselstelle 16 vermindert. Bei einem vorbestimmten Druck überwindet somit die Kraft der Feder 52 den auf den Kolben 50 wirkenden Druck und öffnet das Bypassventil 31, 32. Nun wird auch die Steuerkammer 17 beschleunigt entlüftet und dadurch wiederum ein Druckausgleich zwischen den beiden Drücken D1 und D2 herbeigeführt. Dies hat zur Folge, daß der Kolben 12 nach unten gedrückt wird, wodurch das Beschleunigerventil 13, 14 schließt, bzw. die Entlüftung der Hauptluftleitung 10 in die Atmosphäre unterbindet, so bleibt ein erwünschter Mindestdruck in der Hauptluftleitung 10 erhalten. Es ist klar, daß zur Erhaltung eines erwünschten Mindestdruckes die Querschnitte der Leitungen, sowie die Ventile und deren Steuerelemente entsprechend dimensioniert werden müssen. Bei der Überladung des Schnellbremsbeschleunigers durch einen hohen Füllstoß wirkt der Kolben 40 entgegen der Kraft der Feder 30 und unter entsprechender Berücksichtigung der Druckrückhalteeinrichtung 50, 52 über die Steuerstange 44 auf das Bypassventil 31 und 32 in der vorstehend genannten Art.

In Fig. 6 und 7 wirkt anstelle des Druckes D2 der Steuerkammer 17 der Druck D1 der Hauptluftleitung 10 auf den Kolben 50 über die Verbindungsleitung 102 und die Druckkammer 103. Zusätzlich wird in Fig. 7 der Druck D1 der Hauptluftleitung über den gestrichelt eingezeichneten Kanal 104 in eine Kammer 105 eingebracht. Im Unterschied zur Beschreibung der Fig. 5 wirken hier anstelle des Druckes D2 der Steuerkammer 17 der Druck D1 der Hauptluftleitung 10 entsprechend. Ansonst sind die Funktionen dieselben.

Weitere Beispiele sind denkbar, z. B. könnte anstelle des Druckes D1 der Hauptluftleitung 10 der Druck D2 der Steuerkammer 17 auf den Kolben 50 gemäß Fig. 7 einwirken.

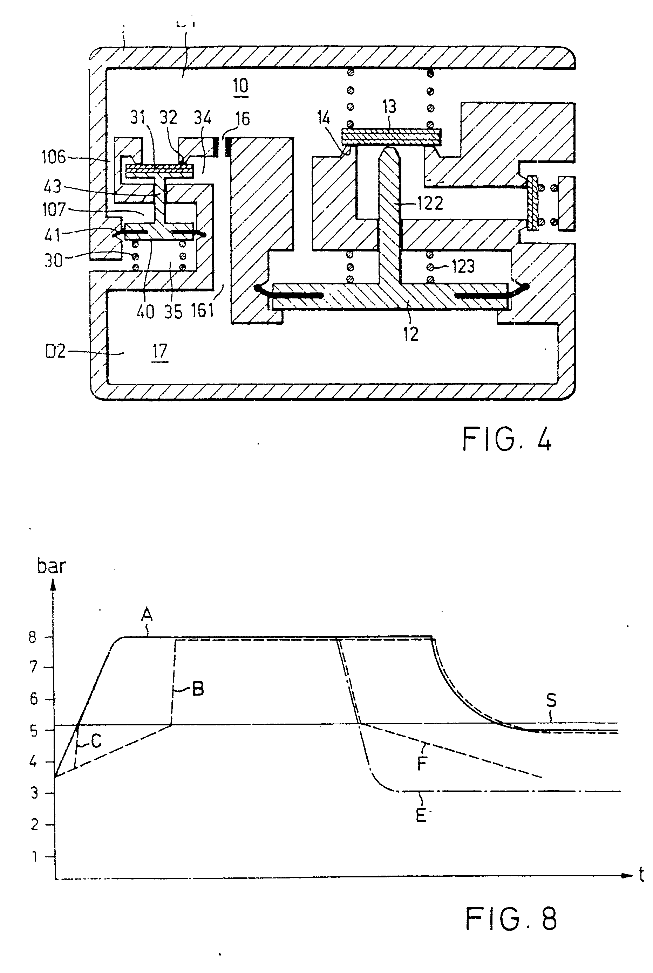

Die Fig. 4 unterscheidet sich von der Fig. 3 nur dadurch, daß hier der Hauptluftleitungsdruck D1 über einen Kanal 106 in einer Druckkammer 107 auf den Kolben 40 entgegen der Kraft der Feder 30 einwirkt.

## Patentansprüche

1. Schnellbremsbeschleuniger für indirekt wirkende Druckluftbremsen von Schienenfahrzeugen, mit einem Steuerkolben (12), der einerseits in Schließrichtung eines von ihm gesteuerten Beschleunigungsventils (13, 14), das in Offenstellung die Entlüftung der Hauptluftleitung (10) bewirkt, vom Druck (D1) der Hauptluftleitung (10) und andererseits vom Druck (D2) einer, mit der Hauptluftleitung (10) über eine Drosselstelle (16) verbundenen Steuerkammer (17) beaufschlagt ist, und mit einem Ventil, das von einem Druck gegen die Kraft einer vorgespannten, in einem Atmosphärendruck aufweisenden Raum (35) angeordneten Feder (30) belastet ist, wobei die Feder (30) auf eine einem den Betriebsdruck der Hauptluftleitung (10) um einen bestimmten Wert übersteigenden Druck entsprechende Kraft vorgespannt ist, gekennzeichnet durch einen parallel zur Drosselstelle (16) ungedrosselt angeordneten, abschließbaren Bypasskanal (34) und ein diesen abschließendes Bypassventil (31, 32), das in Öffnungsrichtung von einem Überladungsfüllstoßdruck (D1, D2) gegen die Kraft der vorgespannten Feder (30) belastet ist zum Offenhalten des Bypassventils (31, 32) bei einem Überladungsfüllstoß.

2. Schnellbremsbeschleuniger nach Anspruch 1, dadurch gekennzeichnet, daß das Bypassventil (31, 32) einen unter Füllstoßdruck (D1, D2) entgegen der Kraft der Feder (30) stehenden Kolben (40) aufweist.

3. Schnellbremsbeschleuniger nach Anspruch 1, dadurch gekennzeichnet, daß das Bypassventil (31, 32) als vorgespanntes Rückschlagventil ausgebildet ist.

4. Schnellbremsbeschleuniger nach einem der vorangehenden Ansprüche, dadurch gekennzeichnet, daß in einem Entlüftungskanal (15) der Hauptluftleitung (10) ein Druckrückhalteventil (20, 21, 23) angeordnet ist.

5. Schnellbremsbeschleuniger nach einem der Ansprüche 1–3, gekennzeichnet durch einen das Bypassventil zusätzlich steuernden Kolben (50), der in Schließrichtung des Bypassventils (31, 32) von einem Fülldruck (D1, D2) entgegen der Kraft einer vorgespannten, in einem Atmosphärendruck aufweisenden Raum angeordneten Feder (52) belastet ist und einen Entlüftungs-

kanal (15) für die Hauptluftleitung (10), der ungedrosselt in die Atmosphäre mündet.

## Claims

1. A rapid-braking accelerator for a railway vehicle indirect-acting compressed air brake with a control piston (12) which is subjected on one side thereof to the pressure in the main air line (10) of the brake and on the other side thereof to the pressure in a control chamber (17), which communicates with the main air line (10) through a choke (16), with an accelerator valve (13, 14) which vents the main air line (10) when a predetermined excess pressure is present in the control chamber (17) effecting the control piston (12) to open the accelerator valve (13, 14), and with a valve which is controlled by a pressure acting against the force of a pretensioned spring (30) arranged in a space (35) open to the atmosphere, wherein the spring (30) is pretensioned to a force corresponding to a pressure exceeding the maximum service control pressure in the main air line (10) by a determined value, characterised by a closable by-pass channel (34) arranged in parallel to said choke (16) and a by-pass valve (31, 32) closing the by-pass channel (34), the by-pass valve (31, 32) being opened by the pressure of a high filling shock (D1, D2) against the force of the pretensioned spring (30).

2. A rapid-braking accelerator according to Claim 1, characterised in that the by-pass valve (31, 32) is controlled by a piston (40) acted upon by the pressure of the high filling shock (D1, D2) against the force of the spring (30).

3. A rapid-braking accelerator according to Claim 1, characterised in that the by-pass valve (31, 32) is constructed as a pretensioned nonreturn valve.

4. A rapid-braking accelerator according to any one of the preceding claims, characterised in that a pressure restrainer valve (20, 21, 23) is arranged in a venting channel (15) of the main air line (10).

5. A rapid-braking accelerator according to any one of Claims 1 to 3, characterised by a piston (50) additionally controlling the by-pass valve (31, 32) and loaded in the closing direktion of the by-pass valve (31, 32) by the pressure of a filling shock (D1, D2) against the force of a pretensioned spring (52) arranged in a space open to the atmosphere, and a venting channel (15) for the main air line (10) which issues unthrottled into the atmosphere.

## Revendications

1. Accélérateur de freinage rapide pour freins à air comprimé à effet indirect de véhicules sur rails, avec un piston de commande (12) qui agit, d'une part, dans le sens de la fermeture d'une soupape d'accélération (13, 14) qu'elle commande, qui, en position d'ouverture, assure l'évacuation de la conduite principale d'air (10), par la pression (D1) de la conduite d'air principale (10) et, d'autre part, par la pression (D2) d'une chambre de commande (17) reliée à la conduite d'air principale (10) par un point d'étranglement (16), et d'une soupape qui est chargée par une pression contre la force d'un ressort (30), précontraint, placé dans une chambre (35) à la pression atmosphérique, le ressort (30) étant précontraint à une force correspondant à une pression qui dépasse d'une valeur prédéterminée la pression de fonctionnement dans la conduite d'air principale (10), accélérateur caractérisé par un canal de by-pass (34) susceptible d'être fermé, sans étranglement, monté en parallèle au point d'étranglement (16), ainsi que d'une soupape de by-pass (31, 32) fermant ce canal, soupape qui est chargée dans le sens de l'ouverture par un choc de pression de remplissage de surcharge (D1, D2) contre la force du ressort précontraint (30), pour maintenir ouverte la soupape de by-pass (31, 32) pour un choc de remplissage et de surcharge.

2. Accélérateur de freinage rapide selon la revendication 1, caractérisé en ce que la soupape de by-pass (31, 32) comporte un piston (40) soumis à la pression du choc de remplissage (D1, D2) contre la force du ressort (30).

3. Accélérateur de freinage rapide selon la revendication 1, caractérisé en ce que la soupape de by-pass (31, 32) est réalisée en forme de soupape d'arrêt, précontrainte.

4. Accélérateur de freinage rapide selon l'une des revendications 1 à 3, caractérisé par une soupape de retenue de pression (20, 21, 23) montée dans le canal d'évacuation (15) de la conduite principale d'air (10).

5. Accélérateur de freinage rapide selon l'une des revendications 1 à 3, caractérisé par un piston (50) commandant de façon supplémentaire la soupape de by-pass, piston qui, dans le sens de fermeture de la soupape de by-pass (31, 32), est chargé par une pression de remplissage (D1, D2) contre la force de ressort (52) placé dans une chambre à la pression atmosphérique, et un canal d'évacuation (15) pour la conduite d'air principale (10) débouchant sans étranglement à l'atmosphère.

FIG. 1

FIG. 2

FIG. 3

FIG. 4

FIG. 8

9

FIG. 5

FIG. 6

FIG. 7